# EUROPÄISCHE PATENTANMELDUNG

(11) **EP 4 270 326 A1**
(43) Veröffentlichungstag der Anmeldung: **01.11.2023**
(21) Anmeldenummer: 22170876.1
(22) Anmeldetag: 29.04.2022
(51) Int. Cl.: G06V 10/10, G06Q 10/10, G06T 7/00, G06T 17/05, G06V 10/75, G06V 20/52, G06V 20/64

(54) **SYSTEM UND DETEKTIONSVERFAHREN ZUR DETEKTION EINES BAUWERKTEILS AUF EINER BAUSTELLE**

(71) Anmelder: Umdasch Group NewCon GmbH, 3300 Amstetten (AT)
(72) Erfinder: DOBER, Florian, 3363 Neufurth (AT); BRANDL, Martin, 3672 Maria Taferl (AT)
(74) Vertreter: SONN Patentanwälte OG

(57) **Zusammenfassung**

System und Detektionsverfahren zur Detektion eines Bauwerkteils (9) auf einer Baustelle (2) mit den folgenden Schritten:
i) Erfassen von zumindest einem Kamerabild von der Baustelle (2) an einer Erfassungsposition (P₁, P₂);
ii) Erzeugen von Datenpunkten (19) in einem dreidimensionalen Koordinatensystem (20), wobei die Datenpunkte (19) die Baustelle (2) abbilden;
iii) Erkennen von Datenpunkten (19), die einem Schalungselement (7) angehören, das in einer Schalstellung angeordnet ist;
iv) Bestimmen jenes Sichtbereichs (22) eines zu errichtenden Bauwerkteils (9) in einem hinterlegten Bauwerkmodell (23), der von der Erfassungsposition (P₁, P₂) aus gemäß einem momentanen Baufortschritt sichtbar ist;
v) Zuordnen der Datenpunkte (19), die dem Schalungselement (7) angehören, zu dem Sichtbereich (22) des zu errichtenden Bauwerkteils (9), wenn das Schalungselement in der Schalstellung zur Errichtung des Bauwerkteils (9) angeordnet ist; und
vi) Detektion des Bauwerkteils (9), wenn eine vorgegebene Anzahl an Datenpunkten (19), die dem Schalungselement (7) angehören, dem Sichtbereich (22) des zu errichtenden Bauwerkteils (9) zugeordnet wird.

## Beschreibung

Die Erfindung betrifft ein Detektionsverfahren und ein System zur Detektion eines Bauwerkteils auf einer Baustelle, insbesondere in der Rohbauerrichtungsphase. Des Weiteren betrifft die Erfindung ein Verfahren zur Überwachung eines Baufortschrittes eines Bauwerks, insbesondere in der Rohbauerrichtungsphase.

Mit Hilfe der technischen Überwachung eines Bauwerks kann bereits während der Bauphase festgestellt werden, ob ein vorgegebener Bauzeitplan eingehalten wird oder Baufehler vorliegen. Dabei kann das reale Bauwerk mit Hilfe von Kameras oder anderen Sensoren erfasst und mit einem Plan oder einem Modell des Bauwerks verglichen werden. Auf Basis dieses Vergleichs können der Baufortschritt abgeleitet und mögliche Baufehler erkannt werden.

Die Einhaltung des Bauzeitplanes und die Erkennung sowie Vermeidung von Baufehlern ist wesentlich für die erfolgreiche Errichtung von Bauwerken. Baufehler führen aufgrund ihrer erforderlichen Behebung zu einer Erhöhung der Kosten und können wiederum eine zeitliche Verzögerung verursachen, die sich wegen der verspäteten Abnahme und Inbetriebnahme des Bauwerks abermals negativ auf die Kosten auswirken kann. Bisher werden Baufehler und der Baufortschritt meist im Rahmen einer Begehung und Dokumentation durch Fachpersonen festgestellt, was Zeit und Personal in Anspruch nimmt. Es ist daher ein Bedürfnis von vielen Unternehmen, Baufehler und den Baufortschritt automatisiert und ohne menschliches Zutun feststellen zu können.

Eine Möglichkeit, Informationen über ein Bauwerk während der Errichtung zu gewinnen, bieten drahtlose Sensoreinheiten, die direkt an den Arbeitsmitteln auf der Baustelle angebracht sind. Bekannt sind derartige Sensoreinheiten beispielsweise aus der WO 2020/038949 A1. Je nach Ausführung können die Sensoreinheiten zum Beispiel die räumliche Position der Arbeitsmittel oder Messwerte wie Temperatur, Feuchtigkeit und Druck über ein Funksystem übertragen. Nachteiligerweise sind die Sensoreinheiten unmittelbar den rauen Umgebungsbedingungen auf der Baustelle ausgesetzt, was zu Ausfällen der Sensoreinheiten und zu verfälschten Messdaten führen kann. Des Weiteren muss neben einer stabilen Funkverbindung auch eine zuverlässige Energieversorgung der Sensoreinheiten gewährleistet werden. Ein weiterer Nachteil von drahtlosen Sensoreinheiten ist der erforderliche Aufwand beim Anbringen, bei der Demontage und bei der Wartung der Sensoreinheiten. Darüber hinaus stellen Diebstähle ein Problem auf Baustellen dar. Nachteilig ist auch, dass Systeme mit drahtlosen Sensoreinheiten meist für spezielle Anwendungsfälle entwickelt und optimiert wurden. Anpassungen der Sensoreinheiten für andere Anwendungsfälle sind meist mit hohem Aufwand verbunden.

In Hinblick auf die Erfassung des Baufortschrittes eines Bauwerks sind kamerabasierte Systeme wesentlich flexibler und leichter zu handhaben. Zwar sind diese Systeme nicht in der Lage, unmittelbar Messdaten wie Temperatur, Feuchtigkeit oder Druck an Bauwerkteilen zur Verfügung zu stellen, aber diese Systeme ermöglichen einen ganzheitlichen Überblick über ein Bauwerk während der Errichtungsphase, insbesondere während der Rohbauerrichtungsphase. Mit Hilfe einer Bildverarbeitungssoftware kann das erfasste Bauwerk analysiert und mit einem Modell verglichen werden, wodurch der Baufortschritt festgestellt werden kann. Mit Hilfe von Trainingsdaten können die Systeme an neue Gegebenheiten und Bauwerke flexibel angepasst werden.

Aus der WO 2019/137814 A1 ist ein Verfahren zur Baustellenüberwachung bekannt, bei dem ein Bauobjekt mittels bildgebender Sensorik bildlich erfasst wird und aus den erfassten Bilddaten ein Merkmal eines konstruktiven Teils des Bauobjekts erkannt wird. Bei dem Merkmal kann es sich beispielsweise um eine Elektroinstallationsdose einer Stahlbetonfertigwand handeln. Die bildgebenden Sensoren können an einer Baumaschine oder an einem Kran angeordnet sein.

Aus JP 2021026281 A und JP 2020181241 A sind weitere Verfahren zur Baustellenüberwachung bekannt.

Ein typisches Problem, das sich bei der Überwachung von Bauwerken mit Hilfe von bildgebenden Sensoren stellt, ist die mögliche Verdeckung von Bauwerkteilen durch andere Bauwerkteile. Wenn eine Wand beispielsweise hinter einer anderen Wand oder einer Säule errichtet wird, ist diese möglicherweise nur teilweise für die Kamera sichtbar und kann somit nicht zuverlässig erkannt werden. Ein weiteres Problem ist, dass insbesondere Betonwände wegen der ähnlichen Farben und Strukturen nur schwer von anderen Betonwänden oder Decken unterschieden werden können. Wenn die Übergänge zwischen den einzelnen Wänden und Böden nicht korrekt erkannt werden, können auch keine Baufehler festgestellt und der Baufortschritt nicht richtig bestimmt werden.

Im Lichte dieser Ausführungen liegt der vorliegenden Erfindung die Aufgabe zugrunde, die Nachteile des Standes der Technik zu lindern oder gar gänzlich zu beseitigen. Vorzugsweise ist es Aufgabe der vorliegenden Erfindung, ein Verfahren und ein System zur Verfügung zu stellen, mit denen Bauwerkteile wie Wände oder Böden zuverlässig erkannt werden können. Des Weiteren ist es Aufgabe der Erfindung, ein Verfahren zur Verfügung zu stellen, mit dem zuverlässig der Baufortschritt überwacht werden kann.

Gelöst werden diese Aufgaben durch ein Detektionsverfahren zur Detektion eines Bauwerkteils nach Anspruch 1, ein Verfahren zur Überwachung eines Baufortschrittes nach Anspruch 12 und ein System zur Detektion eines Bauwerkteils nach Anspruch 13. Bevorzugte Ausführungsformen sind in den abhängigen Ansprüchen angegeben.

Erfindungsgemäß weist das Detektionsverfahren nach Anspruch 1 folgende Schritte auf:
i) Erfassen eines oder mehrerer Kamerabilder von der Baustelle mit zumindest einer, vorzugsweise zumindest zwei voneinander beabstandeten, Digitalkamera/s an einer Erfassungsposition;
ii) Erzeugen von Datenpunkten in einem dreidimensionalen Koordinatensystem, vorzugsweise in Form einer Punktwolke, wobei die Datenpunkte die Baustelle abbilden;
iii) Erkennen von Datenpunkten im dreidimensionalen Koordinatensystem, die einem Schalungselement auf der Baustelle angehören, das in einer Schalstellung angeordnet ist;
iv) Bestimmen jenes Sichtbereichs eines zu errichtenden Bauwerkteils, beispielsweise eines Wand- oder eines Deckenelements, in einem hinterlegten Bauwerkmodell, der von der Erfassungsposition aus gemäß einem momentanen Baufortschritt sichtbar ist;
v) Zuordnen der Datenpunkte, die dem Schalungselement angehören, zu dem Sichtbereich des zu errichtenden Bauwerkteils, wenn das Schalungselement in der Schalstellung zur Errichtung des Bauwerkteils auf der Baustelle angeordnet ist; und
vi) Detektion des Bauwerkteils auf der Baustelle, wenn eine vorgegebene Anzahl an Datenpunkten, die dem Schalungselement angehören, dem Sichtbereich des zu errichtenden Bauwerkteils zugeordnet wird.

Der Erfindung liegt die Erkenntnis zugrunde, dass Schalungselemente auf Baustellen in vielen Situationen sichtbarer sind und leichter erfasst werden können als Betonwände oder Betondecken, die farblich und strukturell gesehen ineinander übergehen und teilweise nur schwer voneinander unterschieden werden können. Aufgrund ihrer Größe, Farbe, Struktur und Form heben sich Schalungselemente, insbesondere Rahmenschalungselemente, vom Bauwerk ab und können dadurch leichter identifiziert und mittels Bildverarbeitungssoftware von anderen Objekten unterschieden werden. Insbesondere Rahmenschalungen besitzen typischerweise an der Rückseite leicht identifizierbare Strukturen wie Querstreben und weisen an der Vorderseite, je nach Hersteller, eine charakteristische Farbe und eine Rahmenkontur auf. Im Falle von Rahmenschalungen für Wände sind zudem noch charakteristische Bohrungen für Ankerstäbe vorgesehen. Wenn nun ein Schalungselement auf der Baustelle in einer Schalstellung vorliegt, kann davon ausgegangen werden, dass ein mit dem Schalungselement zu errichtendes Bauwerkteil vorhanden ist, auch wenn der eingegossene Beton möglicherweise noch nicht vollständig ausgehärtet ist. Ein Vorteil der Erfindung ist, dass auch Bauwerkteile erkannt werden können, die teilweise von anderen Bauwerkteilen verdeckt sind, weil bei der Zuordnung der Datenpunkte, die dem Schalungselement angehören, nur die von der Erfassungsposition aus sichtbaren Bereiche der zu errichtenden Bauwerksteile berücksichtigt werden. Zu diesem Zweck wird ein hinterlegtes 3D-Modell des Bauwerks herangezogen. Das Modell kann als BIM-Modell (BIM = Building Information Modeling) vorliegen oder aus einem solchen abgeleitet sein. Das Modell kann in einem Speicher hinterlegt sein. In Schritt i) werden ein oder mehrere Kamerabilder von der Baustelle erfasst. Die Baustelle umfasst dabei das zu errichtende Bauwerk, beispielsweise ein Gebäude, eine Brücke, oder einen Tunnel, und allfällige Baustelleneinrichtungen, insbesondere die Arbeitsmittel. Die Erfassungsposition, an der sich die zumindest eine Digitalkamera befindet, ist bevorzugt eine Position, an der die zumindest eine Digitalkamera das gesamte zu errichtende Bauwerk aus einem Blickwinkel bildlich erfassen kann. Selbstverständlich können aber auch mehrere Digitalkameras vorgesehen sein, die jeweils einen Teil des Bauwerks erfassen, wobei deren Kamerabilder zusammengeführt werden können, um das gesamte Bauwerk bildlich darzustellen. Bevorzugt ist, wenn die Erfassungsposition im Wesentlichen statisch, d.h. unveränderlich, ist. Es kann aber auch vorgesehen sein, dass sich die Erfassungsposition im Laufe der Zeit ändert. Im Falle einer Änderung der Erfassungsposition wird deren Position (erneut) ermittelt. Dies kann zum Beispiel manuell oder mit Hilfe einer GNSS-Einheit (Global Navigation Satellite System) erfolgen. Die Bestimmung der Erfassungsposition erfolgt aber bevorzugt über Passpunkte auf der Baustelle. Die Passpunkte können beispielsweise (Referenz-)Marker sein, die an der Baustelle angeordnet sind und deren Position bekannt ist bzw. vermessen wurde. Als Marker können zum Beispiel weiße Tafeln mit einem schwarzen Symbol verwendet werden. Die Passpunkte können auch markante Punkte auf der Baustelle sein, wie zum Beispiel eine Gebäudekante von dem bestehenden Bauwerk. Die Position der markanten Punkte ist ebenfalls bekannt, beispielsweise durch Vermessung. Ein Vorteil der Passpunkte ist, dass Bewegungen des Kranes durch Wind oder Lastaufnahme ebenso kompensiert werden wie eine Veränderung der Kameraposition. Wenn mehrere Digitalkameras vorgesehen sind, ist jede Digitalkamera an ihrer eigenen Erfassungsposition angeordnet. Die zumindest eine Digitalkamera kann als Stereokamera ausgebildet sein. Es kann aber auch vorgesehen sein, dass zwei voneinander beabstandete Digitalkameras eine Stereokamera bilden. Die beiden Digitalkameras können in einem solchen Fall beispielsweise an einem gemeinsamen Haltegestell angeordnet sein. In Schritt ii) werden Datenpunkte erzeugt, die die Baustelle in einem dreidimensionalen Koordinatensystem abbilden. Vorzugsweise liegen die Datenpunkte in Form einer Punktwolke vor. Die Datenpunkte können aus den zuvor aufgenommenen, insbesondere zweidimensionalen Kamerabildern erzeugt werden. Es ist aber auch möglich, dass die Datenpunkte mithilfe eines Entfernungsmessgerätes, insbesondere eines LIDAR-Systems (LIDAR: Light Imaging, Detection and Ranging), erzeugt werden. Jedem Datenpunkt kann eine Position im dreidimensionalen Raum zugeordnet sein. Die Position wird durch Koordinaten bestimmt. In Schritt iii) werden jene Datenpunkte erkannt, die einem Schalungselement auf der Baustelle angehören, das in einer Schalstellung angeordnet ist. Die Schalstellung einer Schalung ist jene Stellung, in der Beton in den Aufnahmeraum zwischen Schalungselementen gegossen werden kann, um das Bauwerkteil herzustellen. Die Schalstellung kann beispielsweise bei zu errichtenden vertikalen Wänden daran erkannt werden, dass das Schalungselement vertikal ausgerichtet ist. Die Erkennung von Datenpunkten, die zu dem Schalungselement gehören, kann durch Klassifizierung und einer damit einhergehenden Segmentierung erfolgen. Algorithmen zur Klassifizierung sind aus dem Stand der Technik bekannt. Zur Klassifizierung der einzelnen Bildpunkte können Bildanalysebibliotheken und/oder ein mit Trainingsbeispielen trainierter Klassifikator, beispielsweise ein neuronales Netz, herangezogen werden. Algorithmen zur Segmentierung und Klassifizierung von Objekten in Bilden sind im Stand der Technik bekannt. Zur Klassifizierung von Schalungselementen können Trainingsdaten verwendet werden. Die Klassifizierung bzw. Segmentierung kann in den aufgenommenen Kamerabildern oder in den erzeugten Datenpunkten im dreidimensionalen Raum erfolgen. Wenn die Segmentierung und Klassifizierung in den einzelnen Kamerabildern erfolgt, werden die Datenpunkte im dreidimensionalen Koordinatensystem mit den Bildpunkten der Kamerabilder verknüpft, um jene Datenpunkte zu bestimmen, die dem Schalungselement angehören. Wenn die Datenpunkte aus den Bildpunkten der Kamerabilder erzeugt werden, ist diese Verknüpfung bereits gegeben. Es kann auch vorgesehen sein, dass in Schritt iii) auch andere Schalungselemente erkannt werden, die nicht in einer Schalstellung vorliegen. Diese Schalungselemente werden dann aber bei der Detektion des Bauwerkteils nicht berücksichtigt. In Schritt iv) wird jener Sichtbereich eines zu errichtenden Bauwerkteils in einem hinterlegten Bauwerkmodell bestimmt, der von der Erfassungsposition aus gemäß einem momentanen Baufortschritt sichtbar ist. Unter dem Sichtbereich eines Bauwerkteils können jene Bereiche verstanden werden, die zum Beispiel von der Erfassungsposition aus betrachtet nicht von anderen (zu errichtenden) Bauwerkteilen verdeckt sind. Dabei wird der momentane Baufortschritt berücksichtigt. Der Baufortschritt gibt an, welche Bauwerkteile bereits errichtet sind und welche nicht. Der Sichtbereich kann bestimmt werden, indem ermittelt wird, auf welche Bereiche eines Bauwerkteils Sichtstrahlen von der Erfassungsposition, an der sich eine Digitalkamera befindet, auftreffen. Dabei werden auch die Orientierung, d.h. die Ausrichtung, und intrinsische Kameraparameter der Digitalkamera berücksichtigt. Bei dem zu errichtenden Bauwerkteil kann es sich beispielsweise um eine Wand, einen Boden oder eine Decke handeln. In Schritt v) werden die Datenpunkte, die dem Schalungselement angehören, zu dem Sichtbereich des zu errichtenden Bauwerkteils zugeordnet, wenn das Schalungselement zur Errichtung des Bauwerkteils auf der Baustelle in der Schalstellung angeordnet ist. Das Schalungselement ist insbesondere dann zur Errichtung des Bauwerkteils angeordnet, wenn es sich in einer Schalstellung befindet und an die Position des zu errichtenden Bauwerksteils angrenzt und vorzugsweise parallel zu dessen Oberfläche orientiert ist.. Schließlich wird in Schritt vi) das Bauwerkteil auf der Baustelle detektiert, wenn eine vorgegebene Anzahl an Datenpunkten, die dem Schalungselement angehören, dem Sichtbereich des zu errichtenden Bauwerkteils zugeordnet wird. Solange das Schalelement vorhanden ist, kann das Bauwerkteil als "in Bearbeitung" klassifiziert werden. Vorteilhaft ist, dass nur der Sichtbereich des zu errichtenden Bauwerkteils berücksichtigt wird, wodurch die Fehlerquote bei der Zuordnung reduziert werden kann. Zusammenfassend ist es mit dem erfindungsgemäßen Verfahren möglich, ein Bauwerkteil, beispielsweise eine Wand, eine Decke oder einen Boden, mit Hilfe eines Schalungselements in einer Schalstellung zu detektieren, wenn das Schalungselement in Abhängigkeit des Baufortschritts einem von einer Erfassungsposition aus zumindest teilweise sichtbaren, zu errichtenden Bauwerkteil zugeordnet werden kann. Die Schritte i)-vi) können, müssen aber nicht in der angegebenen Reihenfolge ausgeführt werden. Beispielsweise kann Schritt iv) auch vor Schritt i) ausgeführt werden. Einzelne Schritte können, sofern technisch möglich, zumindest teilweise auch zeitlich überlappend ausgeführt werden.

Gemäß einer bevorzugten Ausführungsform ist vorgesehen, dass der Sichtbereich des zu errichtenden Bauwerkteils in virtuelle Zellen unterteilt wird und die Datenpunkte, die dem Schalungselement angehören, den Zellen des Bauwerkteils entsprechend ihrer Lage im dreidimensionalen Koordinatensystem zugeordnet werden, wobei das Bauwerkteil auf der Baustelle detektiert wird, wenn eine vorgegebene Anzahl an Zellen des Bauwerkteils jeweils zumindest ein Datenpunkt zugeordnet ist. Der Sichtbereich kann bestimmt werden, indem sämtliche Bauwerkteile im Bauwerkmodell in Zellen unterteilt werden und jene Zellen, die von einem Sichtstrahl von der Erfassungsposition einer Digitalkamera aus getroffen werden, berücksichtigt werden. Bevorzugt wird ein Datenpunkt einer Zelle zugeordnet, wenn ein Datenpunkt innerhalb einer Zelle liegt. Die Zellen können beispielsweise kugel-, zylinder- quader- oder würfelförmig sein. Bei einer Ausführungsform wird das zu errichtende Bauwerk in quaderförmige Zellen unterteilt, wobei die Kanten des Würfels 5 cm bis 20 cm, insbesondere im Wesentlichen 10 cm lang sind. Die Zellen können über die Grenzen des zu errichtenden Bauwerkteils hinausragen. Auf diese Weise können die Datenpunkten der Schalungselemente, die an einem zu errichtenden Bauwerksteil angeordnet sind, innerhalb der Zellen liegen. Es können auch zusätzliche Zellen außerhalb das zu errichtende Bauwerkteil 9 vorgesehen sein.

In Schritt iii) kann das Erkennen von Datenpunkten im dreidimensionalen Koordinatensystem, die dem Schalungselement angehören, auf Basis einer Segmentierung und Klassifizierung von segmentierten Bestandteilen des einen Kamerabildes bzw. der mehreren Kamerabilder erfolgen. Segmentierungs- und Klassifizierungsverfahren sind aus dem Stand der Technik bekannt. Es können zum Beispiel speziell angepasste Bildverarbeitungsalgorithmen oder trainierte Netze eingesetzt werden. Insbesondere können Bildanalysebibliotheken in einer Datenbank und/oder mit Trainingsbeispielen trainierte Modelle zur Segmentierung, beispielsweise neuronale Netzwerke, herangezogen werden. Mit Hilfe der Segmentierung und Klassifizierung in den Kamerabildern können Schalungselemente erkannt werden. Durch Zuordnung von Datenpunkten im dreidimensionalen Raum zu Bildpunkten in den Kamerabildern können jene Datenpunkte identifiziert werden, die einem Schalungselement angehören. Die Zuordnung von Datenpunkten zu Bildpunkten kann insbesondere dadurch erfolgen, dass die Datenpunkte aus den Kamerabildern erzeugt werden.

Bei einer Ausführungsform kann vorgesehen sein, dass auf Basis einer Orientierung und eines Schalungstyps des Schalungselements unterschieden wird, ob das Schalungselement in einer Schalstellung oder einer Lagerstellung angeordnet ist und das Schalungselement in Schritt iii) nur berücksichtigt wird, wenn es in der Schalstellung angeordnet ist. Das bedeutet, dass das Schalungselement nicht weiter berücksichtigt wird, wenn es sich in einer Lagerstellung befindet. Ob ein Schalungselement in einer Schalstellung oder in einer Lagerstellung vorliegt, hängt von dem Schalungstyp und dessen Orientierung ab. Wenn es sich um ein Schalungselement für eine vertikale Wand handelt, liegt dieses in einer Schalstellung vor, wenn das Schalungselement angrenzend zur Wand vertikal ausgerichtet ist. Wenn Schalungselemente parallel und gegenüberliegend zueinander angeordnet sind, sodass zwischen ihnen ein Aufnahmeraum ausgebildet wird, kann ebenfalls davon ausgegangen werden, dass sich diese in einer Schalstellung befinden. Wenn das Schalungselement hingegen an einer bereits errichteten Wand anlehnt, außerhalb des Bauwerks angeordnet ist oder am Boden liegt, liegt das Schalungselement in einer Lagerstellung vor. Wenn es sich um ein Schalungselement für eine Decke handelt, liegt dieses in einer Schalstellung vor, wenn das Schalungselement angrenzend zu einer zu errichtenden Decke horizontal ausgerichtet ist. Wenn das Schalungselement für eine Decke hingegen an einer Wand anlehnt, liegt dieses in einer Lagerstellung vor.

Bevorzugt ist, wenn zumindest zwei Digitalkameras an jeweils einer Erfassungsposition vorgesehen sind, wobei die zumindest zwei Digitalkameras eine Stereokamera bilden und die Digitalkameras jeweils im Wesentlichen gleichzeitig Kamerabilder aufnehmen. Die zumindest zwei Digitalkameras können an einem Haltegestell befestigt und über ein Verbindungselement, beispielsweise eine Stange, miteinander verbunden sein. Das Haltegestell kann Gelenke aufweisen, um die Digitalkameras in vertikale und/oder horizontale Richtung auszurichten. Weiters kann das Haltegestell ein Befestigungselement, insbesondere eine Halteklammer, zur Befestigung des Haltegestells an einem Objekt, beispielsweise an einem Kran, aufweisen. In Hinblick auf die Größenordnung der zu erfassenden Bauwerke ist es vorteilhaft, wenn die zumindest zwei Digitalkameras einen Abstand von zumindest 50 cm, bevorzugt von zumindest 80 cm oder von zumindest 100 cm, zueinander aufweisen. Bevorzugt haben die zwei Digitalkameras einen Abstand von im Wesentlichen 120 cm. Die Digitalkameras nehmen jeweils nur zweidimensionale Kamerabilder auf.

Folglich können in Schritt ii) die Datenpunkte im dreidimensionalen Koordinatensystem aus zwei gleichzeitig erfassten Kamerabildern der zumindest zwei Digitalkameras erzeugt werden. Die Position der Datenpunkte im dreidimensionalen Raum kann aus den geometrischen Eigenschaften der Digitalkameras und dem Abstand zwischen den Digitalkameras zueinander abgeleitet werden.

Zur bildlichen Erfassung der Baustelle ist es günstig, wenn die Erfassungsposition an einer Baustelleneinrichtung, insbesondere an einem Kran oder einem Pfosten, oder an einem anderen Bauwerk angeordnet ist. Wenn mehrere Digitalkameras vorgesehen sind, können die Erfassungspositionen dieser Digitalkameras ebenfalls an der Baustelleneinrichtung oder dem anderen Bauwerk angeordnet sein. Bei einer besonders bevorzugten Ausführungsform sind zwei, eine Stereokamera bildende, Digitalkameras vorgesehen und die Erfassungspositionen dieser Digitalkameras sind an der Baustelleneinrichtung, insbesondere einem Kran, oder einem anderen Bauwerk angeordnet. Vorteilhafterweise ist die zumindest eine Digitalkamera vor Beschädigungen und Diebstahl geschützt, wenn sie an einer erhöhten Stelle, wie an einem Kran oder einem Pfosten, angeordnet ist.

Um die Datenpunkte mit dem Modell des Bauwerks besser vergleichen zu können, ist es günstig, wenn auf der Baustelle ein oder mehrere Passpunkte, insbesondere ein oder mehrere Marker, vorgesehen sind und die Datenpunkte in Schritt ii) gemäß dem einen oder mehreren Passpunkten orientiert und/oder skaliert werden. Die Passpunkte können insbesondere durch Schilder oder Plakate gebildet sein. Alternativ können die Passpunkte durch charakteristische Merkmale auf der Baustelle gebildet sein. Die Passpunkte weisen ein Muster auf, das leicht identifizierbar ist. Mit Hilfe des zumindest einen Passpunktes wird die Orientierung, d.h. die Ausrichtung, und die Skalierung der Datenpunkte im dreidimensionalen Koordinatensystem vereinfacht.

In Hinblick auf eine effiziente Datenverarbeitung ist es günstig, wenn Datenpunkte, die keinem Schalungselement angehören, verworfen werden. Mit anderen Worten werden nur Datenpunkte in Schritt v) verwendet, die einem Schalungselement angehören.

Zum Zwecke des Datenschutzes ist es vorteilhaft, wenn in den Kamerabildern und/oder in den Datenpunkten im dreidimensionalen Koordinatensystem Personen detektiert und zumindest Gesichter der Personen anonymisiert werden, beispielsweise durch Verpixelung. Die Detektion von Personen und Gesichtern kann mittels Segmentierung der Kamerabilder und Klassifizierung segmentierter Bildbestandteile erfolgen. Segmentierungs- und Klassifizierungsverfahren sind aus dem Stand der Technik bekannt. Es können zum Beispiel speziell angepasste Bildverarbeitungsalgorithmen oder trainierte Netze eingesetzt werden. Insbesondere können Bildanalysebibliotheken in einer Datenbank und/oder mit Trainingsbeispielen trainierte Modelle zur Segmentierung, beispielsweise neuronale Netzwerke, herangezogen werden. Zur Segmentierung wird bevorzugt ein neuronales Netzwerk verwendet. Die Anonymisierung kann auch dadurch erfolgen, dass eine Fläche über die erkannten Gesichter gelegt wird. Wichtig ist nur, dass Personen für menschliche Betrachter nicht mehr eindeutig identifizierbar sind.

Günstig ist, wenn das Schalungselement ein Rahmenschalungselement oder ein Deckenschalungselement ist. Diese Art von Schalungselementen können ob ihrer Form, Struktur und Farbe besonders einfach erkannt werden. Rahmenschalungen bestehen aus einem Rahmen, insbesondere einem Stahlrahmen, in welchen eine Schalungsplatte eingelegt und fixiert ist. Aufgrund dieser Charakteristik sind Rahmenschalungen besonders einfach zu erkennen. Deckenschalungselemente werden durch Schalungsstützen gestützt und besitzen meist Stirn- oder Randabschalungen, die ein Auslaufen des Betons verhindern. Auch Deckenschalungselemente sind daher leicht zu erkennen.

Erfindungsgemäß ist auch ein Verfahren zur Überwachung eines Baufortschrittes eines Bauwerks, insbesondere in der Rohbauerrichtungsphase, vorgesehen. Das Verfahren weist folgende Schritte auf:
a) Mehrmaliges Ausführen eines Detektionsverfahren zur Detektion eines Bauwerkteils auf einer Baustelle der oben beschriebenen Art;
b) Kennzeichnen eines Bauwerkteils als fertiggestellt, wenn das Bauwerkteil gemäß Schritt vi) des Detektionsverfahren detektiert worden ist und die Datenpunkte, die dem Schalungselement, das zur Errichtung des Bauwerkteils auf der Baustelle angeordnet wurde, angehören, bei einem erneuten Ausführen des Detektionsverfahren in Schritt v) dem Sichtbereich des Bauwerkteils nicht mehr zugeordnet werden.

Wenn ein Schalungselement von dem Bauwerkteil entfernt wurde und daher in Schritt v) des Detektionsverfahrens die Datenpunkte, die dem Schalungselement angehören, nicht mehr dem Bauwerkteil zugeordnet werden, kann davon ausgegangen werden, dass eingegossener Beton ausgehärtet und daher das Bauwerkteil fertiggestellt ist. Solange Datenpunkte eines Schalungselements einem Bauwerkteil zugeordnet werden, kann das Bauwerkteil als "in Bearbeitung" gekennzeichnet werden. Somit kann auch der Baufortschritt aktualisiert werden, wenn ein Bauwerkteil fertiggestellt ist.

Die Erfindung betrifft des Weiteren ein System zur Detektion eines Bauwerkteils auf einer Baustelle, insbesondere in der Rohbauerrichtungsphase. Das System weist dabei Folgendes auf:
zumindest eine, vorzugsweise zwei, Digitalkamera/s zur Erfassung von Kamerabildern von der Baustelle, wobei die zumindest eine Digitalkamera an einer Erfassungsposition anordenbar ist; und
eine Verarbeitungseinheit, die zur Ausführung folgender Schritte eingerichtet ist:
   i) Ansteuerung der zumindest einen Digitalkamera zur Erfassung von einem oder mehreren Kamerabildern von der Baustelle;
   ii) Erzeugen von Datenpunkten in einem dreidimensionalen Koordinatensystem, vorzugsweise in Form einer Punktwolke, wobei die Datenpunkte die Baustelle abbilden;
   iii) Erkennen von Datenpunkten im dreidimensionalen Koordinatensystem, die einem Schalungselement auf der Baustelle angehören;
   iv) Bestimmen jenes Sichtbereichs eines zu errichtenden Bauwerkteils, beispielsweise eines Wand- oder eines Deckenelements, in einem hinterlegten Bauwerkmodell, der von der Erfassungsposition aus gemäß einem momentanen Baufortschritt sichtbar ist, wobei das Bauwerkmodell in einem Speicher hinterlegt ist;
   v) Zuordnen der Datenpunkte, die dem Schalungselement angehören, zu dem Sichtbereich des zu errichtenden Bauwerkteils, wenn das Schalungselement zur Errichtung des Bauwerkteils auf der Baustelle in einer Schalstellung angeordnet ist; und
   vi) Detektion des Bauwerkteils auf der Baustelle, wenn eine vorgegebene Anzahl an Datenpunkten, die dem Schalungselement angehören, dem Sichtbereich des zu errichtenden Bauwerkteils zugeordnet wird.

Das System ist demnach dazu eingerichtet, das oben beschriebene Verfahren auszuführen. Sämtliche Vorteile, Weiterbildungen und Merkmale des Verfahrens sind daher auf das System übertragbar. Die Verarbeitungseinheit kann, aber muss nicht durch eine einzige Einheit gebildet sein. Die Verarbeitungseinheit kann auch als verteilte Verarbeitungseinheit vorliegen, die aus mehreren örtlich voneinander getrennten (Sub-)Einheiten oder Modulen gebildet ist. Die Schritte i)-vi) können, müssen aber nicht in der angegebenen Reihenfolge ausgeführt werden. Beispielsweise kann Schritt iv) auch vor Schritt i) ausgeführt werden. Die Schritte können auch zeitlich überlappend ausgeführt werden.

Bei einer bevorzugten Ausführungsform sind zumindest zwei Digitalkameras vorgesehen, die an einem Haltegestell angeordnet sind, wobei die Digitalkameras einen Abstand von zumindest 50 cm, vorzugsweise von zumindest 100 cm, zueinander aufweisen. Das Haltegestell kann eine Stange aufweisen, die die zumindest zwei Digitalkameras verbindet. Die beiden Digitalkameras bilden eine Stereokamera zur Erzeugung dreidimensionaler Abbildungen.

Im Folgenden wird die Erfindung anhand von Figuren näher beschrieben, auf die sie allerdings nicht beschränkt sein soll. Es zeigen:
Fig. 1 zeigt eine Baustelle, an der das erfindungsgemäße System zur Detektion eines Bauwerkteils eingesetzt wird;
Fig. 2 zeigt im Detail ein Haltegestell für Digitalkameras, die gemeinsam eine Stereokamera bilden;
Fig. 3A und Fig. 3B veranschaulichen schematisch einen Sichtbereich und Datenpunkte eines Bauwerkteils;
Fig. 4 zeigt schematisch Datenpunkte, die einem Bauwerkteil zugeordnet werden; und
Fig. 5 zeigt schematisch den Ablauf eines erfindungsgemäßen Detektionsverfahren zur Detektion eines Bauwerkteils auf einer Baustelle;
Fig. 6 zeigt schematisch den Ablauf eines erfindungsgemäßen Verfahrens zur Überwachung eines Baufortschrittes eines Bauwerks; und
Fig. 7 zeigt schematisch den Austausch von Daten bei einem System zur Detektion eines Bauwerkteils auf einer Baustelle.

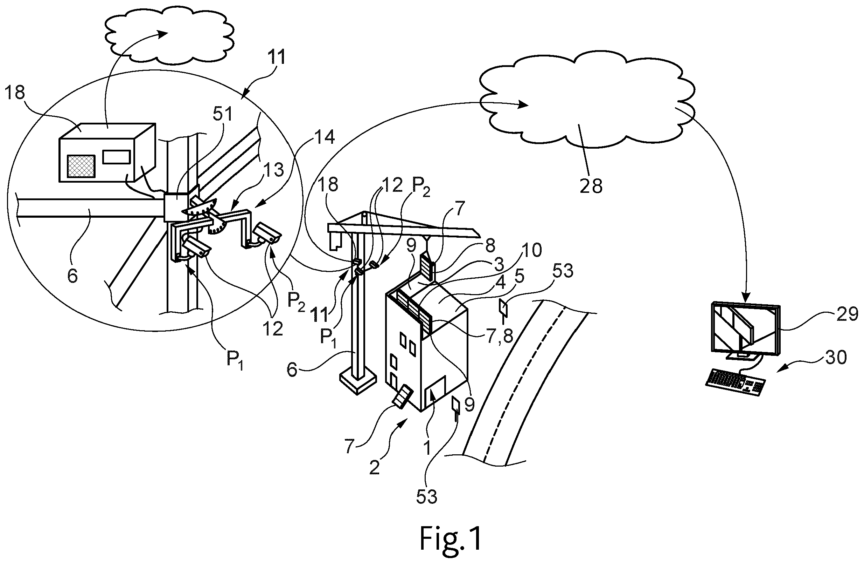

Fig. 1 zeigt ein noch nicht fertiggestelltes Bauwerk 1 in der Rohbauerrichtungsphase auf einer Baustelle 2. Bei dem Bauwerk 1 handelt es sich um ein mehrgeschossiges Gebäude 1a in Form eines Hauses. In der Rohbauerrichtungsphase ist der Rohbau noch nicht fertiggestellt. Dies bedeutet, dass noch nicht alle Wände 3, Böden 4 und Decken 5 des Bauwerks 1 errichtet sind.

In der gezeigten Darstellung befördert ein Kran 6 ein Schalungselement 7, insbesondere ein Rahmenschalungselement 8, auf das oberste Stockwerk des noch nicht fertiggestellten Bauwerks 1. Das Schalungselement 7 dient, wie die anderen bereits auf dem Bauwerk 1 befindlichen Schalungselemente 7, dazu, einen noch zu errichtenden Bauwerkteil 9, im vorliegenden Fall eine Wand 3, herzustellen. Zu diesem Zweck werden mehrere Schalungselemente 7 einander gegenüberliegend und bei Bedarf auch nebeneinander angeordnet, sodass ein Aufnahmeraum 10 ausgebildet wird, in den Beton (nicht gezeigt) eingefüllt werden kann. Diese Stellung der Schalungselemente wird als Schalstellung bezeichnet. Während der Aushärtung des Betons befindet sich das Bauwerkteil 9 in Bearbeitung. Nach Aushärtung des Betons werden die Schalungselemente 7 wieder entfernt und das Bauwerkteil 2 ist fertiggestellt. In Fig. 1 ist ein Schalelement 7 nicht in der Schalstellung und an eine Wand 3 des untersten Stockwerks des Bauwerks 1 angelehnt. Dieses Schalelement 7 befindet sich in einer Lagerstellung.

Für die erfolgreiche Errichtung eines Bauwerks 1 ist es essentiell, einen vorgegebenen Bauzeitplan einzuhalten. Zu diesem Zweck sollten Baufehler frühzeitig erkannt und der Baufortschritt regelmäßig erfasst werden. Um Baufehler und den Baufortschritt festzustellen, müssen einzelne Bauwerkteile 9, also Wände 3, Böden 4 und Decken 5, während der Bauphase detektiert werden.

Erfindungsgemäß ist zu diesem Zweck ein System 11 zur Detektion eines Bauwerkteils 9 vorgesehen. Das System 11 weist in der gezeigten Ausführungsform zwei Digitalkameras 12 auf, die an einem Haltegestell 13 befestigt sind. Das Haltegestell 13 ist wiederum an dem Kran 6 montiert, von wo aus die Digitalkameras 12 das in der Bauphase befindliche Bauwerk 1 bildlich erfassen können. Die beiden Digitalkameras 12 bilden gemeinsam eine Stereokamera 14. Die beiden Digitalkameras 12 sind jeweils an einer eigenen Erfassungsposition P₁, P₂ angeordnet. Die Digitalkameras 12 sind jeweils dazu eingerichtet, zweidimensionale Kamerabilder aufzunehmen.

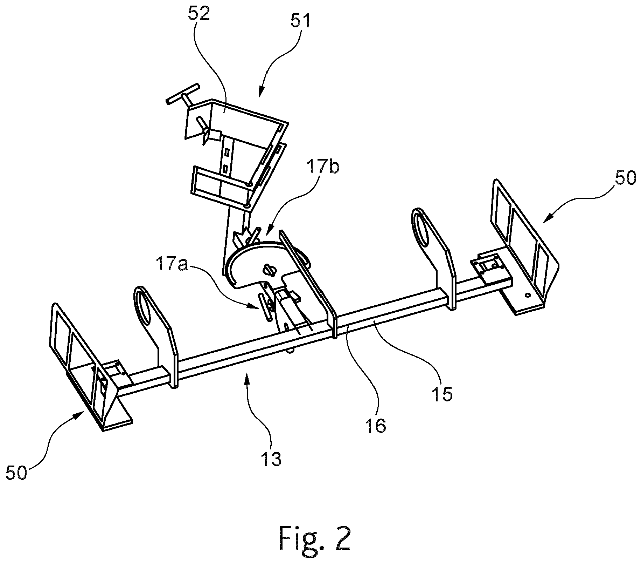

Das Haltegestell 13 ist in Fig. 2 vergrößert dargestellt und besitzt ein Verbindungselement 15, vorzugsweise eine Stange 16 oder ein Profilelement, an dem die Digitalkameras 12 befestigbar sind. Das Haltegestell 13 weist weiters zumindest zwei Gelenke 17a,b auf, wobei eines der Gelenke 17a eine Verschwenkung des Verbindungselements 15 in vertikale und eines der Gelenke 17b eine Verschwenkung des Verbindungselements 15 in horizontale Richtung ermöglicht. Die Gelenke 17 sind jeweils verriegelbar, beispielsweise mit Hilfe von Verriegelungsstiften, die in Verriegelungslöcher eingreifen, um eine Verschwenkung des Verbindungselements 15 zu sperren. Die Montagestellen 50 zur Montage der Digitalkameras 12 sind bevorzugt an den Enden des Verbindungselements 15 angeordnet und insbesondere zumindest 50 cm voneinander beabstandet. Mit einem Befestigungselement 51, beispielsweise einer Halteklammer 52, ist das Haltegestell 13 an einem Objekt, insbesondere dem Kran 6, lösbar befestigbar.

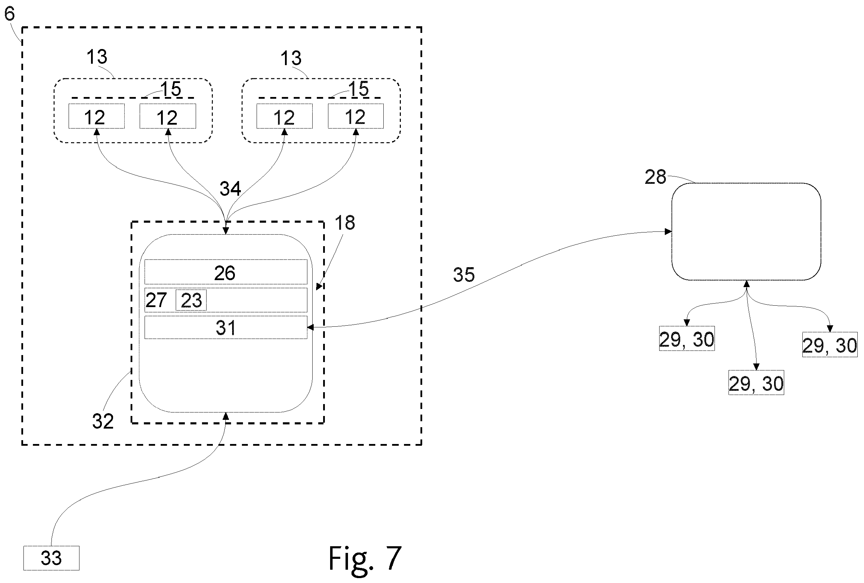

Das System 11 weist weiters eine Verarbeitungseinheit 18 auf (siehe Fig. 7), bei der es sich nicht zwangsläufig um eine einzige zentralisierte Einheit handeln muss. Es kann auch vorgesehen sein, dass es sich bei der Verarbeitungseinheit 15 um eine verteilte Verarbeitungseinheit 18 handelt, die auf mehrere verteilte (Sub-)Einheiten oder Module aufgeteilt ist, die örtlich voneinander getrennt sind. Somit können die von der Verarbeitungseinheit 15 vorgenommenen Verarbeitungsschritte auch an unterschiedlichen Orten erfolgen.

Das System 11 ist dazu ausgebildet, das nachfolgend beschriebene Verfahren auszuführen, wobei die angegebenen Schritte nicht zwangsläufig in der beschriebenen Reihenfolge durchgeführt werden müssen. Einzelne Schritte können auch vertauscht oder zumindest teilweise oder vollständig überlappend ausgeführt werden.

In einem ersten Schritt i) wird mit Hilfe der Digitalkameras 12 jeweils zumindest ein zweidimensionales Kamerabild von dem zu noch nicht fertiggestellten Bauwerk 1 aufgenommen. Bevorzugt ist, wenn die Kamerabilder der beiden Digitalkameras 12 im Wesentlichen gleichzeitig aufgenommen werden.

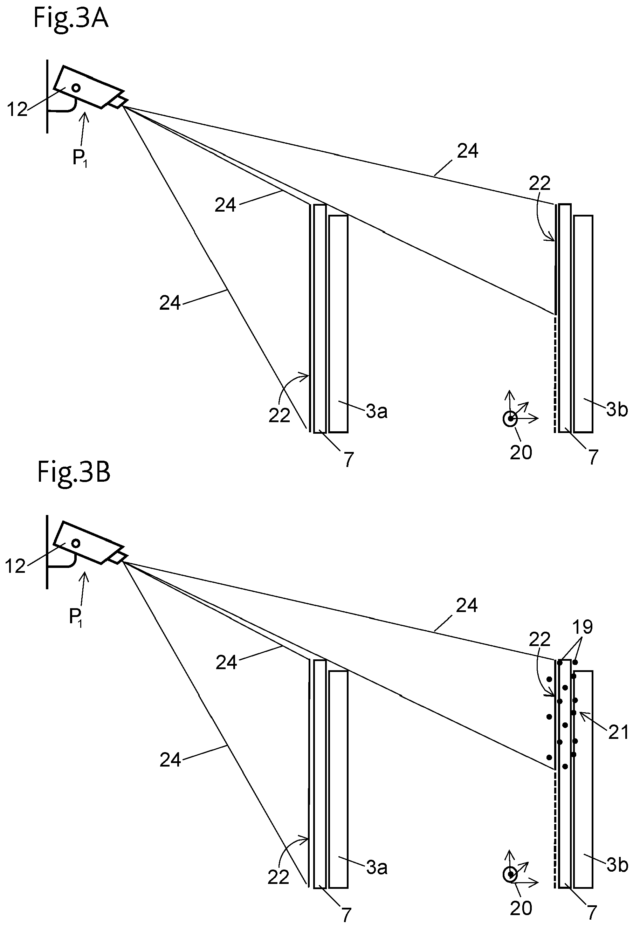

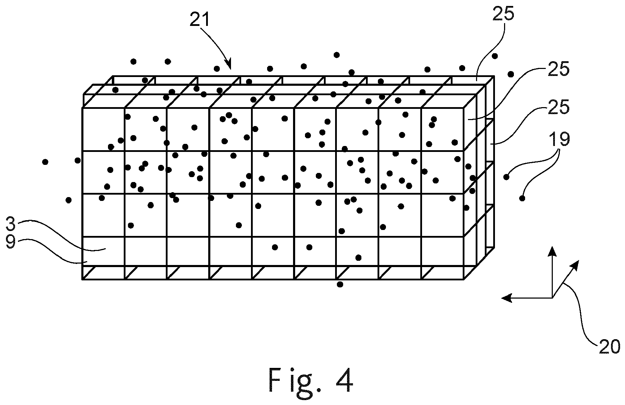

In einem zweiten Schritt ii) werden aus zumindest zwei Kamerabildern, die von den Digitalkameras 12 jeweils im Wesentlichen zeitgleich aufgenommen wurden, Datenpunkte 19 in einem dreidimensionalen Koordinatensystem 20 erzeugt, welche Datenpunkte 19 die Baustelle 2, also das Bauwerk 1 und allfällige Arbeitsmittel wie zum Beispiel Schalungselemente 7, abbilden (siehe Fig. 3A, B und Fig. 4). Jedem Datenpunkt 19 ist eine eindeutige Position in Form von Koordinaten im dreidimensionalen Koordinatensystem 20 zugeordnet. Die Menge an Datenpunkten 19 kann auch als Punktwolke 21 bezeichnet werden. Jeder Datenpunkt 19 gehört einem Objekt oder einer Person auf der Baustelle 2 an. Um die Punktwolke 21 auszurichten und zu skalieren, können auf der Baustelle Passpunkte 53 platziert sein. Die Passpunkte 53 erleichtern die Bestimmung von Abständen und Orientierungen.

In einem dritten Schritt iii) werden Datenpunkten 19 im dreidimensionalen Koordinatensystem 20, die einem Schalungselement 7 in einer Schalstellung auf der Baustelle 2 angehören, erkannt. Der Erfindung liegt nämlich die Erkenntnis zugrunde, dass Schalungselemente 7 einfacher erkannt werden können, weil sie sich durch ihre Form, Farbe und Struktur leichter von übrigen Objekten auf der Baustelle 2 abheben. Die Erkennung von Schalungselementen 7 kann insbesondere auf Basis einer Segmentierung und anschließenden Klassifizierung der segmentierten Bildbestandteile erfolgen. Jene Datenpunkte 19, die in Schritt ii) aus Bildpunkten hervorgegangen sind, die zu Schalungselementen 7 gehören, können als Datenpunkte 19 deklariert werden, die einem Schalungselement 7 angehören. Die Schalstellung einer Schalung für eine Wand ist beispielsweise jene Stellung, in der Beton in den Aufnahmeraum 10 gegossen werden kann, um das Bauwerkteil 9 herzustellen. Die Schalstellung kann beispielsweise bei zu errichtenden Wänden 3 daran erkannt werden, dass das Schalungselement 7 vertikal ausgerichtet ist.

In einem vierten Schritt iv) wird jener Sichtbereich 22 eines zu errichtenden Bauwerkteils 9 in einem hinterlegten Bauwerkmodell 23, insbesondere einem digitalen BIM-Modell, (siehe Fig. 7) bestimmt, der von den Erfassungspositionen P₁, P₂ aus gemäß einem momentanen Baufortschritt sichtbar ist. Der Sichtbereich hängt von der Erfassungsposition P₁, P₂ und der Orientierung der Digitalkamera 12 ab. In diesem Schritt ist das Bauwerkteil 9 noch nicht als fertiggestellt klassifiziert. Ziel ist es, das Bauwerkteil 9 auf der Baustelle 2 zu detektieren. Dies soll mithilfe der vorhandenen Schalungselemente 7 geschehen.

Die Bestimmung eines Sichtbereichs 22 von einer Erfassungsposition P₁, P₂ aus ist in Fig. 3A gezeigt. In Fig. 3A sind schematisch zwei hintereinander angeordnete Wände 3a, b und eine Digitalkamera 12 gezeigt, die sich an einer Erfassungsposition P₁ befindet. Aus der Sicht der Digitalkamera 12 ist die hintere Wand 3b von der vorderen Wand 3a zumindest teilweise verdeckt, d.h. manche Sichtstrahlen 24 treffen auf die vordere Wand 3a, aber nicht auf die hintere Wand 3b bzw. das ebenfalls eingezeichnete Schalungselement 7 auf. Die Sichtstrahlen 24 sind in Fig. 3A schematisch eingezeichnet. Jener Bereich, auf den Sichtstrahlen 24 von der Erfassungsposition P₁ der Digitalkamera 12 auftreffen, stellt den Sichtbereich 22 eines Bauwerkteils 9 dar. Auf Basis der Kenntnis der Erfassungsposition P₁ und der Orientierung der Digitalkamera 12 sowie intrinsischer Parameter kann in einem Bauwerkmodell 23 jener Sichtbereich 22 bestimmt werden, der von der Erfassungsposition P₁ aus sichtbar ist. Der Sichtbereich 22 kann in Abhängigkeit des Baufortschrittes bestimmt werden, da zu einem späteren Zeitpunkt, der Sichtbereich 22 aufgrund hinzugekommener Bauwerkteile 9 eingeschränkt sein kann.

In einem fünften Schritt v) werden jene Datenpunkte 19, die dem Schalungselement 7 in der Schalstellung angehören, zu dem Sichtbereich 22 des zu errichtenden Bauwerkteils 9 zugeordnet, wenn das Schalungselement 7 zur Errichtung des Bauwerkteils 9 auf der Baustelle 2 in einer Schalstellung angeordnet ist. Das Schalungselement 7 ist insbesondere dann zur Errichtung des Bauwerkteils 9 angeordnet, wenn es sich in einer Schalstellung befindet und an die Position des zu errichtenden Bauwerksteils 9 angrenzt und vorzugsweise parallel zu dessen Oberfläche orientiert ist..

In Fig. 3B sind Datenpunkte 19 eingetragen, die einem Schalungselement 7 angehören, welches zur Errichtung der Wand 3b in einer Schalstellung angeordnet ist. Die Datenpunkte 19 können demnach der Wand 3b zugeordnet werden.

Die Zuordnung der Datenpunkte 19 ist schematisch in Fig. 4 gezeigt und kann dadurch erfolgen, dass der Sichtbereich 22 eines zu errichtenden Bauwerkteils 9 in Zellen 25 unterteilt wird und jene Datenpunkte 19, die innerhalb der Zellen 25 liegen, den entsprechenden Zellen 25 zugeordnet werden. Die Zellen 25 können über die Grenzen des zu errichtenden Bauwerkteils 9 hinausragen, sodass die Datenpunkte 19 des Schalungselements 7 in den Zellen 25 liegen. Die Zellen haben in der gezeigten Darstellung die Form von Würfeln. Die Kantenlängen können beispielsweise 10 cm betragen.

In Schritt vi) wird das Bauwerkteil detektiert, wenn eine vorgegebene Anzahl an Datenpunkten 19, die dem Schalungselement 7 angehören, dem Sichtbereich 22 des zu errichtenden Bauwerkteils 9 zugeordnet wird. Dies kann insbesondere dadurch erfolgen, dass eine bestimmte Anzahl an mit Datenpunkten 19 gefüllten Zellen 25 vorliegt. Wenn also eine bestimmte Anzahl an gefüllten Zellen 25 vorliegt, kann das zu errichtende Bauwerkteil 9 als vorhanden deklariert werden.

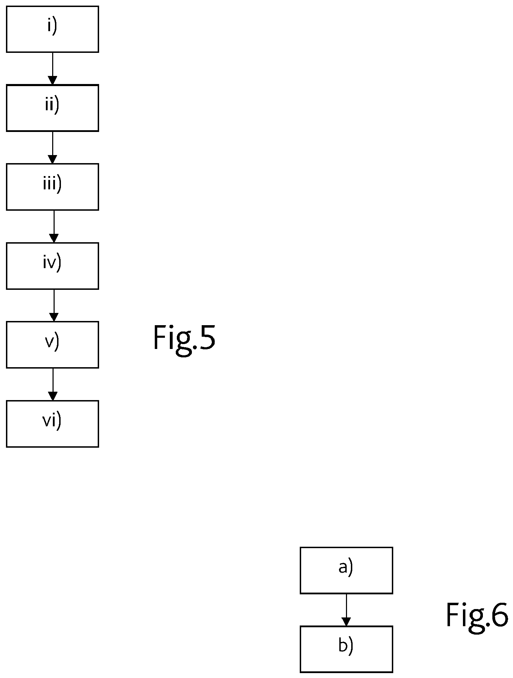

Fig. 5 zeigt schematisch den Ablauf des bisher beschriebenen Detektionsverfahrens.

Fig. 6 zeigt den Ablauf eines Verfahrens zur Überwachung eines Baufortschrittes eines Bauwerks 1. Dabei wird das oben beschriebene Verfahren zur Detektion eines Bauwerkteils 9 mehrfach ausgeführt (Schritt a)). Wenn ein Bauwerkteil 9 detektiert wird, wird dieses als "in Bearbeitung" klassifiziert, und zwar so lange, wie die Datenpunkte 19 des Schalungselements 7, das zur Errichtung des Bauwerkteils 9 angeordnet wurde, dem Sichtbereich 22 des Bauwerkteils 9 zugeordnet werden. Sobald die Datenpunkte 19 des Schalungselements 7, das zur Errichtung des Bauwerkteils 9 angeordnet wurde, nicht mehr dem Sichtbereich 22 des Bauwerkteils 9 zugeordnet werden, d.h. das Schalungselement 7 nicht mehr für das Bauwerkteil 9 benötigt wird, wird das Bauwerkteil 9 als "fertiggestellt" klassifiziert (Schritt b).

Fig. 7 zeigt schematisch den Aufbau des Systems 11 zur Detektion eines Bauwerkteils 9. Wie bereits oben erwähnt, muss die Verarbeitungseinheit 18 nicht als eine einzige Einheit vorliegen, sondern kann auch aus mehreren dezentralen (Sub-)Einheiten bestehen, die örtlich voneinander getrennt sind. Im vorliegenden Fall weist die Verarbeitungseinheit 18 eine zentrale Recheneinheit 26 auf, die die Schritte i)-vi) des Verfahrens ausführt bzw. veranlasst. Das Bauwerkmodell 23, das in Schritt iv) herangezogen wird, ist in einem Speicher 27 hinterlegt, der im gezeigten Ausführungsbeispiel einen Bestandteil der Verarbeitungseinheit 18 bildet oder alternativ in einem Server 28 angeordnet sein kann. In dem Speicher 27 können auch weitere Daten, wie Trainingsdaten für Segmentierung und Klassifizierung von Schalungselementen 7, hinterlegt sein. Auf einem Bildschirm 29 eines Computers 30 (siehe auch Fig. 1) können detektierte Bauwerkteile 9 und der festgestellte Baufortschritt angezeigt werden. Am Bildschirm 29 können darüber hinaus auch detektierte Personen, vorzugsweise anonymisiert, sowie detektierte Baugeräte, wie etwa Betonkübel oder LKWs, angezeigt werden. Die Verarbeitungseinheit 18 weist eine Datenübertragungseinheit 31 zur Verbindung mit dem Server 28 auf. Die Verarbeitungseinheit 18 kann mittels einer Montagehalterung 32 an dem Kran 6 befestigt sein. Über eine Leitung wird die Verarbeitungseinheit 18 mit elektrischer Energie 33 versorgt. Die Energie kann von einem Versorgungsnetz oder einem Energiespeicher stammen. Die Digitalkameras 12 sind über Daten- und Stromverbindungen 34 mit der Verarbeitungseinheit 18 verbunden. Die Verarbeitungseinheit 18 ist in der gezeigten Darstellung mittels Datenverbindung 35 mit dem Server 28 verbunden. Der Computer 30 kann ebenfalls mit dem Server 28 verbunden sein und dadurch die Verarbeitungseinheit 18 sowie die Digitalkameras 12 ansteuern bzw. Daten von diesen abrufen.

## Patentansprüche

1. Detektionsverfahren zur Detektion eines Bauwerkteils (9) auf einer Baustelle (2), insbesondere in der Rohbauerrichtungsphase, mit den folgenden Schritten:
i) Erfassen eines oder mehrerer Kamerabilder von der Baustelle (2) mit zumindest einer, vorzugsweise zumindest zwei voneinander beabstandeten, Digitalkamera/s (12) an einer Erfassungsposition (P₁, P₂);
ii) Erzeugen von Datenpunkten (19) in einem dreidimensionalen Koordinatensystem (20), vorzugsweise in Form einer Punktwolke (21), wobei die Datenpunkte (19) die Baustelle (2) abbilden;
iii) Erkennen von Datenpunkten (19) im dreidimensionalen Koordinatensystem (20), die einem Schalungselement (7) auf der Baustelle (2) angehören, das in einer Schalstellung angeordnet ist;
iv) Bestimmen jenes Sichtbereichs (22) eines zu errichtenden Bauwerkteils (9), beispielsweise eines Wand- (3) oder eines Deckenelements (5), in einem hinterlegten Bauwerkmodell (23), der von der Erfassungsposition (P₁, P₂) aus gemäß einem momentanen Baufortschritt sichtbar ist;
v) Zuordnen der Datenpunkte (19), die dem Schalungselement (7) angehören, zu dem Sichtbereich (22) des zu errichtenden Bauwerkteils (9), wenn das Schalungselement (7) in der Schalstellung zur Errichtung des Bauwerkteils (9) auf der Baustelle (2) angeordnet ist; und
vi) Detektion des Bauwerkteils (9) auf der Baustelle (2), wenn eine vorgegebene Anzahl an Datenpunkten (19), die dem Schalungselement (7) angehören, dem Sichtbereich (22) des zu errichtenden Bauwerkteils (9) zugeordnet wird.

2. Detektionsverfahren nach Anspruch 1, **dadurch gekennzeichnet, dass** der Sichtbereich (22) des zu errichtenden Bauwerkteils (9) in virtuelle Zellen (25) unterteilt wird und die Datenpunkte (19), die dem Schalungselement (7) angehören, den Zellen (25) des Bauwerkteils (9) entsprechend ihrer Lage im dreidimensionalen Koordinatensystem (20) zugeordnet werden, wobei das Bauwerkteil (9) auf der Baustelle (2) detektiert wird, wenn einer vorgegebenen Anzahl an Zellen (25) des Bauwerkteils (9) jeweils zumindest ein Datenpunkt (19) zugeordnet ist.

3. Detektionsverfahren nach Anspruch 1 oder 2, **dadurch gekennzeichnet, dass** in Schritt iii) das Erkennen von Datenpunkte (19) im dreidimensionalen Koordinatensystem (20), die dem Schalungselement (7) angehören, auf Basis einer Segmentierung und Klassifizierung von segmentierten Bestandteilen des einen Kamerabildes bzw. der mehreren Kamerabilder erfolgt.

4. Detektionsverfahren nach einem der Ansprüche 1 bis 3, **dadurch gekennzeichnet, dass** auf Basis einer Orientierung und eines Schalungstyps des Schalungselements (7) unterschieden wird, ob das Schalungselement (7) in einer Schalstellung oder einer Lagerstellung angeordnet ist und das Schalungselement (7) in Schritt iii) nur berücksichtigt wird, wenn es in der Schalstellung angeordnet ist.

5. Detektionsverfahren nach einem der Ansprüche 1 bis 4, **dadurch gekennzeichnet, dass** zumindest zwei Digitalkameras (12) an jeweils einer Erfassungsposition (P₁, P₂) vorgesehen sind, wobei die zumindest zwei Digitalkameras (12) eine Stereokamera (14) bilden und die Digitalkameras (12) jeweils gleichzeitig Kamerabilder aufnehmen.

6. Detektionsverfahren nach Anspruch 5, **dadurch gekennzeichnet, dass** in Schritt ii) die Datenpunkte (19) im dreidimensionalen Koordinatensystem (20) aus zwei gleichzeitig erfassten Kamerabildern der zumindest zwei Digitalkameras (12) erzeugt werden.

7. Detektionsverfahren nach einem der Ansprüche 1 bis 6, **dadurch gekennzeichnet, dass** die Erfassungsposition (P₁, P₂) an einer Baustelleneinrichtung, insbesondere an einem Kran (6) oder einem Pfosten, oder an einem anderen Bauwerk (1) angeordnet ist.

8. Detektionsverfahren nach einem der Ansprüche 1 bis 7, **dadurch gekennzeichnet, dass** auf der Baustelle (2) ein oder mehrere Passpunkte (53), insbesondere ein oder mehrere Marker, vorgesehen sind und die Datenpunkte (19) in Schritt ii) gemäß dem einen oder mehreren Passpunkten (53) orientiert und/oder skaliert werden.

9. Detektionsverfahren nach einem der Ansprüche 1 bis 8, **dadurch gekennzeichnet, dass** Datenpunkte (19), die keinem Schalungselement (7) angehören, verworfen werden.

10. Detektionsverfahren nach einem der Ansprüche 1 bis 9, **dadurch gekennzeichnet, dass** in dem Kamerabild bzw. den mehreren Kamerabildern und/oder in den Datenpunkten (19) im dreidimensionalen Koordinatensystem (20) Personen detektiert und zumindest Gesichter der Personen anonymisiert werden, insbesondere durch Verpixelung.

11. Detektionsverfahren nach einem der Ansprüche 1 bis 10, **dadurch gekennzeichnet, dass** das Schalungselement (7) ein Rahmenschalungselement (8) oder ein Deckenschalungselement ist.

12. Verfahren zur Überwachung eines Baufortschrittes eines Bauwerks (1), insbesondere in der Rohbauerrichtungsphase, mit den folgenden Schritten:
a) Mehrmaliges Ausführen eines Detektionsverfahren zur Detektion eines Bauwerkteils auf einer Baustelle nach einem der Ansprüche 1 bis 11;
b) Kennzeichnen eines Bauwerkteils (9) als fertiggestellt, wenn das Bauwerkteil (9) gemäß Schritt vi) des Detektionsverfahren detektiert worden ist und die Datenpunkte (19), die dem Schalungselement (7), das zur Errichtung des Bauwerkteils (9) auf der Baustelle (2) angeordnet wurde, angehören, bei einem erneuten Ausführen des Detektionsverfahren in Schritt v) dem Sichtbereich (22) des Bauwerkteils (9) nicht mehr zugeordnet werden.

13. System (11) zur Detektion eines Bauwerkteils (9) auf einer Baustelle (2), insbesondere in der Rohbauerrichtungsphase, aufweisend:
zumindest eine, vorzugsweise zwei, Digitalkamera/s (12) zur Erfassung von Kamerabildern von der Baustelle (2), wobei die zumindest eine Digitalkamera (12) an einer Erfassungsposition (P₁, P₂) anordenbar ist; und
eine Verarbeitungseinheit (18), die zur Ausführung folgender Schritte eingerichtet ist:
i) Ansteuerung der zumindest einen Digitalkamera (12) zur Erfassung von einem oder mehreren Kamerabildern von der Baustelle (2);
ii) Erzeugen von Datenpunkten (19) in einem dreidimensionalen Koordinatensystem (20), vorzugsweise in Form einer Punktwolke (21), wobei die Datenpunkte (19) die Baustelle (2) abbilden;
iii) Erkennen von Datenpunkten (19) im dreidimensionalen Koordinatensystem (20), die einem Schalungselement (7) auf der Baustelle (2) angehören, das in einer Schalstellung angeordnet ist;
iv) Bestimmen jenes Sichtbereichs (22) eines zu errichtenden Bauwerkteils (9), beispielsweise eines Wand- (3) oder eines Deckenelements (5), in einem hinterlegten Bauwerkmodell (23), der von der Erfassungsposition (P₁, P₂) aus gemäß einem momentanen Baufortschritt sichtbar ist, wobei das Bauwerkmodell (23) in einem Speicher (27) hinterlegt ist;
v) Zuordnen der Datenpunkte (19), die dem Schalungselement (7) angehören, zu dem Sichtbereich (22) des zu errichtenden Bauwerkteils (9), wenn das Schalungselement (7) in der Schalstellung zur Errichtung des Bauwerkteils (9) auf der Baustelle (2) angeordnet ist; und
vi) Detektion des Bauwerkteils (9) auf der Baustelle (2), wenn eine vorgegebene Anzahl an Datenpunkten (19), die dem Schalungselement angehören, dem Sichtbereich des zu errichtenden Bauwerkteils (9) zugeordnet wird.

14. System (11) nach Anspruch 13, **dadurch gekennzeichnet, dass** zumindest zwei Digitalkameras (12) vorgesehen sind, die an einem Haltegestell (13) angeordnet sind, wobei die Digitalkameras (12) einen Abstand von zumindest 50 cm, vorzugsweise von zumindest 100 cm, zueinander aufweisen.
